# EUROPÄISCHE PATENTSCHRIFT

(11) **EP 2 104 548 B1**
(45) Veröffentlichungstag und Bekanntmachung des Hinweises auf die Patenterteilung: **29.03.2017**
(21) Anmeldenummer: 07857682.4
(22) Anmeldetag: 17.12.2007
(51) Int. Cl.: B01D 53/22, B01D 71/64, B01D 67/00

(54) **MEMBRANEN ZUR TRENNUNG VON GASEN**
GAS SEPARATION MEMBRANES
MEMBRANES POUR LA SÉPARATION DE GAZ

(30) Priorität: 23.12.2006 DE 102006061457; 04.12.2007 DE 102007058320
(43) Veröffentlichungstag der Anmeldung: 30.09.2009
(73) Patentinhaber: Evonik Degussa GmbH, 45128 Essen (DE)
(72) Erfinder: SEILER, Matthias, 64347 Griesheim (DE); BERNHARDT, Stefan, 63075 Offenbach (DE); SCHNEIDER, Rolf, 63584 Gründau-Rothenbergen (DE); WURSCHE, Roland, 48249 Dülmen (DE); BAUMANN, Franz-Erich, 48249 Dülmen (DE)
(86) Internationale Anmeldenummer: PCT/EP2007/064051
(87) Internationale Veröffentlichungsnummer: WO 2008/077837

(56) Entgegenhaltungen:
- EP-A- 0 780 152
- EP-A2- 1 013 702
- WO-A-2007/105952
- WO-A1-97/46747
- JP-A- 2001 106 916
- US-A1- 2002 002 242

## Beschreibung

Die vorliegende Erfindung betrifft Membranen zur Gastrennung.

Membranen zur Trennung von Gasen sind seit längerem bekannt, wobei diese beispielhaft in einem Übersichtsartikel von C.E. Powell und G.G. Qiao in "Polymeric CO2/N2 gas separation membranes for the capture of carbon dioxide from power plant flue gases", Journal of Membrane Science, 279 (2006), 1-49 beschrieben sind.

Hierzu gehören insbesondere Membranen, die als Trenn- oder Filterschicht bestimmte Hochleistungspolymere, beispielsweise Polyimide, Polysulfone usw. aufweisen. Derartige Membranen sind ausführlicher in WO 2004/050223 dargelegt.

Darüber hinaus sind ebenfalls Membranen bekannt, die durch Verwendung von hochverzweigten Polymeren vernetzt wurden. Diese Membranen sind unter anderem in EP-A-1 457 253; L. Shao et al. Journal of Membrane Science, 238 (2004), 153 oder T.-S. Chung et al. Langmuir 20 (2004) 2966 dargelegt. Zur Vernetzung werden die eingesetzten Membranen in ein Quellungsmittel gegeben, das ein entsprechendes Vernetzungsmittel umfasst. Durch die in diesen Dokumenten beschriebene Vernetzung werden Vorteile im Hinblick auf die Selektivität erzielt. Allerdings nimmt die Gasdurchlässigkeit stark ab.

Darüber hinaus sind in WO 2006/046795 Membranen auf Basis von Polymerblends beschrieben, die amorphe lineare und semikristalline Polymere umfassen. Des Weiteren sind in WO 99/40996 Membranen beschrieben, die durch Imprägnieren von Poren mit Polymeren erhalten werden. Hierbei werden auch Membranen dargelegt, die hyperverzweigte Polymere umfassen. Allerdings werden in diesem Dokument keine Mischungen aus hyperverzweigten Polymeren und linearen Polymeren dargelegt. Darüber hinaus zeigen die hyperverzweigten Polymere eine geringere Leistungsfähigkeit als lineare Polymere.

Mischungen aus hochverweigten Carbosiloxanpolymeren und linearen Polymeren zur Gastrennung sind aus der EP1 013 702 bekannt. Die WO97/46747 offenbart eine Mischung aus hochverzweigten und linearen Polyamiden zur Herstellung von Fasern.

Des Weiteren werden von T. Suzuki et al., Polymer 45 (2004) 7167-7171 Membranen beschrieben, die aus hyperverzweigten Polyimiden hergestellt wurden. Der Vergleich zeigt jedoch, dass die Selektivität von Membranen aus linearen Polymeren höher ist als die von Membranen aus hyperverzweigten Polymeren. Dies gilt insbesondere in Bezug auf die Stickstoff/Sauerstoff-Permeabilität. Eine Mischung von linearen und hyperverzweigten Polymeren wird in dieser Druckschrift nicht dargelegt.

Die zuvor beschriebenen Membranen zeigen bereits ein gutes Leistungsspektrum. Allerdings besteht ein dauerhaftes Bedürfnis die Leistungsfähigkeit dieser Membranen zu verbessern.

In Anbetracht des Standes der Technik ist es nun Aufgabe der vorliegenden Erfindung, Membranen und Zusammensetzungen zur Herstellung dieser Membranen zur Verfügung zu stellen, die ein besonders gutes Eigenschaftsprofil zeigen.

Ein besonderes Problem bestand insbesondere darin, Membranen zur Trennung von Stoffen und insbesondere von Gasen zu schaffen, die eine hohe Selektivität bei hoher Permeabilität aufweisen. Eine weitere Aufgabe kann darin gesehen werden, Membranen anzugeben, die eine besonders hohe mechanische Stabilität und eine lange Lebensdauer aufweisen. Des Weiteren sollten die Membranen für eine Vielzahl von unterschiedlichen Gastrennungen eingesetzt werden können. Darüber hinaus sollte die Membran einfach und kostengünstig herstellbar sein.

Gelöst werden diese sowie weitere nicht explizit genannte Aufgaben, die jedoch aus den hierin einleitend diskutierten Zusammenhängen ohne weiteres ableitbar oder erschließbar sind, durch eine Membran gemäß Anspruch 1.

Mit der anspruchsgemäßen Zusammensetzung der Filterschicht gelingt es überraschend Membranen zur Verfügung zu stellen, die ein besonders gutes Eigenschaftsprofil aufweisen.

Zugleich lassen sich durch die erfindungsgemäße Membran eine Reihe weiterer Vorteile erzielen. So zeigen die erfindungsgemäßen Membranen eine hohe Selektivität bei hoher Permeabilität. Des Weiteren weisen die Membranen der vorliegenden Erfindung eine besonders hohe mechanische Stabilität und eine lange Lebensdauer auf. Weiterhin können die Membranen für eine Vielzahl von unterschiedlichen Gastrennungen eingesetzt werden. Darüber hinaus sind die Membranen einfach und kostengünstig herstellbar.

Eine Zusammensetzung zur Herstellung der vorliegenden Membranen umfasst mindestens 0,1 Gew.-%, bevorzugt mindestens 0,5 Gew.-% und ganz besonders bevorzugt mindestens 2 Gew.-% hochverzweigtes Polymer.

Das hochverzweigte Polymer kann vorzugsweise ein Molekulargewicht von mindestens 1500 g/mol, besonders bevorzugt mindestens 3000 g/mol aufweisen. Vorzugsweise beträgt das Molekulargewicht höchstens 100000 g/mol, besonders bevorzugt höchstens 50000 g/mol. Diese Größe bezieht sich auf das Gewichtsmittel des Molekulargewichts (M_{w}), welches gemäß ISO 16014 mittels Gelpermationschromatographie gemessen wird, wobei die Messung in DMF erfolgt und als Referenz Polyethylenglykole eingesetzt werden (vgl. u.a. Burgath et. al in Macromol. Chem. Phys., 201 (2000) 782-791). Hierbei wird eine Kalibrierkurve eingesetzt, die unter Verwendung von Polystyrol-Standards erhalten wurde.

Die Polydispersität M_{w}/Mₙ bevorzugter hochverzweigter Polymere liegt vorzugsweise im Bereich von 1,01 bis 10,0, besonders bevorzugt im Bereich von 1,10 bis 8,0 und ganz besonders bevorzugt im Bereich von 1,2 bis 5,0, wobei das Zahlenmittel des Molekulargewichts (Mₙ) ebenfalls durch GPC gemäß ISO 16014 erhalten wird.

Die Viskosität des hochverzweigten Polymeren liegt vorzugsweise im Bereich von 50 mPas bis 1000 Pas, besonders bevorzugt im Bereich von 70 mPas bis 300 Pas, wobei diese Größe mittels Oszillationsviskosimetrie bei 30 s⁻¹ zwischen Kegel und Platte gemessen wird. Die Schmelzviskosität wird gemäß ASTM D 4440 bestimmt. Die Temperatur zur Messung der Schmelzviskosität beträgt 220 °C; bei höherschmelzenden Polymeren beträgt sie 240 °C oder 260 °C, bei noch höherschmelzenden Polymeren 280 °C, 300 °C, 320 °C, 340 °C oder 360 °C. Es ist immer die tiefstmögliche Temperatur zu wählen, bei der das Polymere ausreichend verarbeitbar ist. Eine ausreichend hohe Schmelzviskosität ist deswegen erwünscht, weil die erfindungsgemäße Membran eine ausreichende mechanische Stabilität besitzen sollte.

Der Verzweigungsgrad des hochverzweigten Polymers liegt bevorzugt im Bereich von 1 bis 95 %, vorzugsweise 2 bis 75 %. Der Verzweigungsgrad ist abhängig von den zur Herstellung des Polymers eingesetzten Komponenten sowie den Reaktionsbedingungen. Das Verfahren zur Bestimmung des Verzweigungsgrads ist in D. Hölter, A. Burgath, H. Frey, Acta Polymer., 1997, 48, 30 dargelegt. Der Verzweigungsgrad kann weiterhin mindestens 5 %, mindestens 10 % oder mindestens 25 % betragen.

Das hochverzweigte Polymer weist vorzugsweise eine Schmelztemperatur kleiner als 350 °C, bevorzugt kleiner als 275 °C, besonders bevorzugt kleiner als 250 °C auf. Gemäß einem besonderen Aspekt der vorliegenden Erfindung beträgt die Schmelztemperatur des hochverzweigten Polymers mindestens 100 °C, vorzugsweise mindestens 150 °C und ganz besonders bevorzugt mindestens 170 °C. Die Glasübergangstemperatur des hochverzweigten Polymers ist vorzugsweise kleiner 175 °C, bevorzugt kleiner 150 °C und besonders bevorzugt kleiner 125 °C. Vorzugsweise beträgt die Glasübergangstemperatur des hochverzweigten Polymers mindestens 0 °C, besonders bevorzugt mindestens 10 °C. Vorzugsweise können die hyperverzweigten Polymere sowohl eine Glasübergangstemperatur als auch einen Schmelzpunkt aufweisen. Die Schmelz- und Glasübergangstemperatur wird mittels Differential Scanning Calometry (DSC) gemäß ISO 11357-3 bestimmt.

Vorzugsweise weist das hochverzweigte Polymer eine hohe Hydrolysebeständigkeit auf.

Als hochverzweigtes Polymer wird ein Polyamid-Pfropfcopolymer eingesetzt, das Einheiten aufweist, die von folgenden Monomeren abgeleitet sind:
a) 0,5 bis 25 Gew.-%, bezogen auf das Pfropfcopolymer, eines Polyamins mit mindestens 11 Stickstoffatomen und einem zahlenmittleren Molekulargewicht Mₙ von mindestens 500 g/mol und
b) polyamidbildenden Monomeren.

Derartige Polyamid-Pfropfcopolymere werden beispielweise in der EP 1 065 236 beschrieben.

Als Polyamin wird folgende Substanzklasse verwendet:
verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das zur Herstellung bevorzugter hochverzweigter Polymere einsetzbare Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Als polyamidbildende Monomere können bekannte Mischungen von Diaminen und Dicarbonsäuren bzw. Derivate hiervon eingesetzt werden, die zur Herstellung von Polyamiden eingesetzt werden. Gemäß einem besonderen Aspekt der vorliegenden Erfindung können zur Herstellung der zuvor dargelegten Polyamid-Pfropfcopolymer Lactame und/oder ω-Aminocarbonsäuren eingesetzt werden. Bevorzugte Lactame und/oder ω-Aminocarbonsäuren enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Das Gewichtsverhältnis von Polyamin zu polyamidbildenden Monomeren zur Herstellung der Polyamid-Pfropfcopolymer liegt vorzugsweise im Bereich von 1 : 2 bis 1 : 200, besonders bevorzugt 1 : 4 bis 1 : 100. Dieses Gewichtsverhältnis ergibt sich aus den zur Herstellung eingesetzten Komponenten.

Gemäß einem besonderen Aspekt können die zuvor dargelegten Polyamid-Pfropfcopolymere Einheiten enthalten, die von Oligocarbonsäuren abgeleitet sind.
in der Fachwelt bekannt und beispielsweise im Römpp Chemie Lexikon 2. Auflage auf CD-ROM beschrieben.
Kammpolymere weisen eine Hauptkette auf, an die Seitenketten geknüpft sind. Bevorzugte Kammpolymere weisen mindestens 5, bevorzugt mindestens 10 und ganz besonders bevorzugt mindestens 20 Seitenketten auf. Das Gewichtsverhältnis von Hauptkette zu den Seitenketten liegt vorzugsweise im Bereich von 1 : 2 bis 1 : 200, besonders bevorzugt 1 : 4 bis 1 : 100. Dieses Gewichtsverhältnis ergibt sich aus den zur Herstellung eingesetzten Komponenten.

Sternpolymere weisen ein Zentrum auf, das beispielsweise ein hyperverzweigtes Polymer darstellen kann. Von dem Zentrum gehen Polymerketten aus, die auch als Arme bezeichnet werden. Bevorzugte Sternpolymere weisen mindestens 5, besonders bevorzugt mindestens 8 und ganz besonders bevorzugt mindestens 15 Arme auf. Das Gewichtsverhältnis von Zentrum zu den Armen liegt vorzugsweise im Bereich von 1 : 2 bis 1 : 200, besonders bevorzugt 1 : 4 bis 1 : 100. Dieses Gewichtsverhältnis ergibt sich aus den zur Herstellung eingesetzten Komponenten.

Das hochverzweigte Polymer kann vorzugsweise ein Molekulargewicht von mindestens 1500 g/mol, besonders bevorzugt mindestens 3000 g/mol aufweisen. Vorzugsweise beträgt das Molekulargewicht höchstens 100000 g/mol, besonders bevorzugt höchstens 50000 g/mol. Diese Größe bezieht sich auf das Gewichtsmittel des Molekulargewichts (M_{w}), welches gemäß ISO 16014 mittels Gelpermationschromatographie gemessen wird, wobei die Messung in DMF erfolgt und als Referenz Polyethylenglykole eingesetzt werden (vgl. u.a. Burgath et. al in Macromol. Chem. Phys., 201 (2000) 782-791). Hierbei wird eine Kalibrierkurve eingesetzt, die unter Verwendung von Polystyrol-Standards erhalten wurde.

Die Polydispersität M_{w}/Mₙ bevorzugter hochverzweigter Polymere liegt vorzugsweise im Bereich von 1,01 bis 10,0, besonders bevorzugt im Bereich von 1,10 bis 8,0 und ganz besonders bevorzugt im Bereich von 1,2 bis 5,0, wobei das Zahlenmittel des Molekulargewichts (Mₙ) ebenfalls durch GPC gemäß ISO 16014 erhalten wird.

Die Viskosität des hochverzweigten Polymeren liegt vorzugsweise im Bereich von 50 mPas bis 1000 Pas, besonders bevorzugt im Bereich von 70 mPas bis 300 Pas, wobei diese Größe mittels Oszillationsviskosimetrie bei 30 s⁻¹ zwischen Kegel und Platte gemessen wird. Die Schmelzviskosität wird gemäß ASTM D 4440 bestimmt. Die Temperatur zur Messung der Schmelzviskosität beträgt 220 °C; bei höherschmelzenden Polymeren beträgt sie 240 °C oder 260 °C, bei noch höherschmelzenden Polymeren 280 °C, 300 °C, 320 °C, 340 °C oder 360 °C. Es ist immer die tiefstmögliche Temperatur zu wählen, bei der das Polymere ausreichend verarbeitbar ist. Eine ausreichend hohe Schmelzviskosität ist deswegen erwünscht, weil die erfindungsgemäße Membran eine ausreichende mechanische Stabilität besitzen sollte.

Der Verzweigungsgrad des hochverzweigten Polymers liegt bevorzugt im Bereich von 1 bis 95 %, vorzugsweise 2 bis 75 %. Der Verzweigungsgrad ist abhängig von den zur Herstellung des Polymers eingesetzten Komponenten sowie den Reaktionsbedingungen. Das Verfahren zur Bestimmung des Verzweigungsgrads ist in D. Hölter, A. Burgath, H. Frey, Acta Polymer., 1997, 48, 30 dargelegt. Der Verzweigungsgrad kann weiterhin mindestens 5 %, mindestens 10 % oder mindestens 25 % betragen.

Das hochverzweigte Polymer weist vorzugsweise eine Schmelztemperatur kleiner als 350 °C, bevorzugt kleiner als 275 °C, besonders bevorzugt kleiner als 250 °C auf. Gemäß einem besonderen Aspekt der vorliegenden Erfindung beträgt die Schmelztemperatur des hochverzweigten Polymers mindestens 100 °C, vorzugsweise mindestens 150 °C und ganz besonders bevorzugt mindestens 170 °C. Die Glasübergangstemperatur des hochverzweigten Polymers ist vorzugsweise kleiner 175 °C, bevorzugt kleiner 150 °C und besonders bevorzugt kleiner 125 °C. Vorzugsweise beträgt die Glasübergangstemperatur des hochverzweigten Polymers mindestens 0 °C, besonders bevorzugt mindestens 10 °C. Vorzugsweise können die hyperverzweigten Polymere sowohl eine Glasübergangstemperatur als auch einen Schmelzpunkt aufweisen. Die Schmelz- und Glasübergangstemperatur wird mittels Differential Scanning Calometry (DSC) gemäß ISO 11357-3 bestimmt.

Vorzugsweise weist das hochverzweigte Polymer eine hohe Hydrolysebeständigkeit auf.

Zu den bevorzugten hochverzweigten Polymeren gehören insbesondere Polyamide, Polyesteramide, Polyamidoamine, Polyimidoamine, Polypropylenamine, Polyimide, Polyetherimide, Polysilane, Polysiloxane, Polysulfone, Polyurethane und Polyharnstoffe, die besonders bevorzugt hyperverzweigte Polymere sind. Derartige Polymere sind an sich bekannt und vielfach beschrieben. Diese Polymere können funktionelle Gruppen enthalten, wie zum Beispiel ionische Gruppen.

Bevorzugte hochverzweigte Polymere weisen polare endständige Gruppen auf, vorzugsweise Carboxyl- oder Aminogruppen. Besonders bevorzugte hochverzweigte Polymere weisen endständige Aminogruppen auf, wobei hiervon primäre und sekundäre Aminogruppen bevorzugt sind.

Vorzugsweise weist ein erfindungsgemäß einzusetzendes, hochverzweigtes Polymer Polyamideinheiten auf. Hochverzweigte Polymere mit Polyamideinheiten sind insbesondere in EP 1 065 236 dargelegt.

Im Rahmen einer besonders bevorzugten Variante der vorliegenden Erfindung kann mindesteins ein Polyamid-Pfropfcopolymer eingesetzt werden, das vorzugsweise Einheiten aufweist, die von folgenden Monomeren abgeleitet sind:
a) 0,5 bis 25 Gew.-%, bezogen auf das Pfropfcopolymer, eines Polyamins mit mindestens 11 Stickstoffatomen und einem zahlenmittleren Molekulargewicht Mₙ von mindestens 500 g/mol und
b) polyamidbildenden Monomeren.

Als Polyamin können beispielsweise folgende Substanzklassen verwendet werden:
Polyvinylamine (Römpp Chemie Lexikon, 9. Auflage, Band 6, Seite 4921, Georg Thieme Verlag Stuttgart 1992);
Polyamine, die aus alternierenden Polyketonen hergestellt werden (DE-OS 196 54 058); Dendrimere wie beispielsweise ((H₂N-(CH₂)₃)₂N-(CH₂)₃)₂-N(CH₂)₂-N((CH₂)₂-N((CH₂)₃-NH₂)₂)₂
(DE-A-196 54 179) oder 3,15-Bis(2-aminoethyl)-6,12-bis[2-[bis(2-aminoethyl)amino]ethyl]-9-[2-[bis[2-bis(2-aminoethyl)amino]ethyl]amino]ethyl]3,6, 9,12,15-pentaazaheptadecan-1,17-diamin (J. M. Warakomski, Chem. Mat. 1992, 4, 1000-1004);
lineare Polyethylenimine, die durch Polymerisation von 4,5-Dihydro-1,3-oxazolen und anschließender Hydrolyse hergestellt werden können (Houben-Weyl, Methoden der Organischen Chemie, Band E20, Seiten 1482 - 1487, Georg Thieme Verlag Stuttgart, 1987);
verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das zur Herstellung bevorzugter hochverzweigter Polymere einsetzbare Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Als polyamidbildende Monomere können bekannte Mischungen von Diaminen und Dicarbonsäuren bzw. Derivate hiervon eingesetzt werden, die zur Herstellung von Polyamiden eingesetzt werden. Gemäß einem besonderen Aspekt der vorliegenden Erfindung können zur Herstellung der zuvor dargelegten Polyamid-Pfropfcopolymer Lactame und/oder ω-Aminocarbonsäuren eingesetzt werden. Bevorzugte Lactame und/oder ω-Aminocarbonsäuren enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Das Gewichtsverhältnis von Polyamin zu polyamidbildenden Monomeren zur Herstellung der Polyamid-Pfropfcopolymer liegt vorzugsweise im Bereich von 1 : 2 bis 1 : 200, besonders bevorzugt 1 : 4 bis 1 : 100. Dieses Gewichtsverhältnis ergibt sich aus den zur Herstellung eingesetzten Komponenten.

Gemäß einem besonderen Aspekt können die zuvor dargelegten Polyamid-Pfropfcopolymere Einheiten enthalten, die von Oligocarbonsäuren abgeleitet sind.

Als Oligocarbonsäure kann jede beliebige Di- oder Tricarbonsäure mit 6 bis 24 C-Atomen eingesetzt werden, beispielsweise Adipinsäure, Korksäure, Azelainsäure, Sebacinsäure, Dodecandisäure, Isophthalsäure, 2,6-Naphthalindicarbonsäure, Cyclohexan-1.4-dicarbonsäure, Trimesinsäure und/oder Trimellitsäure.

Vorzugsweise sind die Oligocarbonsäuren ausgewählt aus 0,015 bis etwa 3 Mol-% Dicarbonsäure und/oder 0,01 bis etwa 1,2 Mol-% Tricarbonsäure, jeweils bezogen auf Lactam bzw. ω-Aminocarbonsäure.

Wird eine Dicarbonsäure verwendet, setzt man bevorzugt 0,03 bis 2,2 Mol-%, besonders bevorzugt 0,05 bis 1,5 Mol-%, ganz besonders bevorzugt 0,1 bis 1 Mol-% und insbesondere 0,15 bis 0,65 Mol-%, jeweils bezogen auf Lactam bzw. ω-Aminocarbonsäure, zu; verwendet man eine Tricarbonsäure, nimmt man vorzugsweise 0,02 bis 0,9 Mol-%, besonders bevorzugt 0,025 bis 0,6 Mol-%, ganz besonders bevorzugt 0,03 bis 0,4 Mol-% und insbesondere 0,04 bis 0,25 Mol-%, jeweils bezogen auf Lactam bzw. ω-Aminocarbonsäure. Durch die Mitverwendung der Oligocarbonsäure wird die Hydrolysebeständigkeit verbessert.

Die Aminogruppenkonzentration des als hochverzweigtes Polymer einsetzbaren Polyamid-Pfropfcopolymers kann vorzugsweise im Bereich von 100 bis 2500 mmol/kg, insbesondere im Bereich von 150 bis 1500 mmol/kg, besonders bevorzugt im Bereich von 250 bis 1300 mmol/kg und ganz besonders bevorzugt im Bereich von 300 bis 1100 mmol/kg liegen. Unter Aminogruppen werden hier und im Folgenden nicht nur Aminoendgruppen, sondern auch gegebenenfalls vorhandene sekundäre bzw. tertiäre Aminfunktionen des Polyamins verstanden.

Zusätzlich können, falls gewünscht, aliphatische, alicyclische, aromatische, aralkylische und/oder alkylaryl-subsitituierte Monocarbonsäuren mit 3 bis 50 Kohlenstoffatomen wie z. B. Laurylsäure, ungesättigte Fettsäuren, Acrylsäure oder Benzoesäure als Regler zur Herstellung der Polyamid-Pfropfcopolymere eingesetzt werden. Mit diesen Reglern kann die Konzentration an Aminogruppen verringert werden, ohne die Molekülgestalt zu verändern. Zusätzlich können auf diese Weise funktionelle Gruppen wie Doppel- bzw. Dreifachbindungen etc. eingeführt werden.

Bevorzugt wird ein hochverzweigtes Polyamid-Pfropfcopolymer eingesetzt, das
0,5 Gew.-% bis 20 Gew.-% Polyethylenimin, 79 Gew.-% bis 99 Gew.-% polyamidbildendes Monomer, vorzugsweise ein Lactam, wie Caprolactam oder Laurinlactam, und
0 Gew.-% bis 1,0 Gew.-% Oligocarbonsäure umfasst, wobei die Prozentangaben auf das Gesamtgewicht des Polymeren bezogen sind.

Die Zusammensetzung der vorliegenden Erfindung weist mindestens 0,5 Gew.-%, bevorzugt mindestens 5 Gew.-% und ganz besonders bevorzugt mindestens 10 Gew.-% lineares Polymer auf. Der Begriff lineares Polymer ist in der Fachwelt bekannt, wobei hierunter Polymere verstanden werden, die eine Hauptkette aufweisen, deren Kettenlänge wesentlich größer ist als die Kettenlänge eventuell vorhandener Seitenketten. Bevorzugt beträgt das Gewichtsverhältnis der in der Hauptkette enthaltenen Kohlenstoffatome zu den in einer Seitenkette enthaltenen Kohlenstoffatomen mindestens 10, besonders bevorzugt mindestens 20 und ganz besonders bevorzugt mindestens 30.

Vorzugsweise weisen die linearen Polymere ein Molekulargewicht von mindestens 1000 g/mol, besonders bevorzugt mindestens 5000 g/mol und ganz besonders bevorzugt mindestens 10000 g/mol auf. Vorzugsweise beträgt das Molekulargewicht höchstens 1000000 g/mol, besonders bevorzugt höchstens 500000 g/mol und ganz besonders bevorzugt höchstens 250000 g/mol. Diese Größe bezieht sich auf das Gewichtsmittel des Molekulargewichts (M_{w}), welches mittels Gelpermationschromatographie gemäß ISO 16014 gemessen wird.

Die Polydispersität M_{w}/Mₙ bevorzugter linearer Polymere liegt vorzugsweise im Bereich von 1,01 bis 5,0, besonders bevorzugt im Bereich von 1,10 bis 4,0 und ganz besonders bevorzugt im Bereich von 1,2 bis 3,5, wobei das Zahlenmittel des Molekulargewichts (Mₙ) ebenfalls durch GPC gemäß ISO 16014 erhalten wird.

Je nach Kristallinität weisen die linearen Polymere eine Glasübergangstemperatur und/oder eine Schmelztemperatur auf. Das lineare Polymer weist vorzugsweise eine Schmelztemperatur kleiner 400 °C, bevorzugt kleiner 370 °C auf. Gemäß einem besonderen Aspekt der vorliegenden Erfindung beträgt die Schmelztemperatur des linearen Polymers mindestens 100 °C, vorzugsweise mindestens 200 °C und ganz besonders bevorzugt mindestens 300 °C. Die Glasübergangstemperatur des linearen Polymers ist vorzugsweise kleiner als 400 °C, bevorzugt kleiner als 370 °C. Vorzugsweise beträgt die Glasübergangstemperatur des linearen Polymers mindestens 0 °C, besonders bevorzugt mindestens 200 °C und ganz besonders bevorzugt mindestens 300 °C. Besonders bevorzugte lineare Polymere weisen eine Glasübergangstemperatur auf. Die Messung der Schmelz- und Glasübergangstemperatur erfolgt mittels Differential Scanning Calorimetry (DSC) gemäß ISO 11357-3.

Die Viskosität des linearen Polymeren liegt vorzugsweise im Bereich von 50 mPas bis 500000 Pas, besonders bevorzugt im Bereich von 100 mPas bis 10000 Pas, wobei diese Größe mittels Oszillationsviskosimetrie bei 30 s⁻¹ zwischen Kegel und Platte gemessen wird. Die Schmelzviskosität wird gemäß ASTM D 4440 bestimmt. Die Temperatur zur Messung der Schmelzviskosität beträgt 220 °C; bei höherschmelzenden Polymeren beträgt sie 240 °C oder 260 °C, bei noch höherschmelzenden Polymeren Polymeren 280 °C, 300 °C, 320 °C, 340 °C oder 360 °C. Es ist immer die tiefstmögliche Temperatur zu wählen, bei der das Polymere ausreichend verarbeitbar ist. Eine ausreichend hohe Schmelzviskosität ist deswegen erwünscht, weil die erfindungsgemäße Membran eine ausreichende mechanische Stabilität besitzen soll.

Zu den bevorzugten linearen Polymeren gehören unter anderem Polyimide, Polyetherimide, Polysulfone, Polyarylate, Polyetherarylate, Polycarbonate, Polypyrrolone, Polyacetylene, Polyethylenoxide, Polyphenylenoxide, Polyphenylensulfide, Polyetheretherketon, Polybenzimidazole, Polyoxadiazole und Polyaniline. Diese Polymere können einzeln oder als Mischung eingesetzt werden. Des Weiteren können auch Copolymere eingesetzt werden, die von den zuvor genannten Polymeren abgeleitet sind.

Besonders bevorzugt einzusetzende Polyimide sind unter anderem in WO 2006/075203, WO 2004/050223 und C.E. Powell und G.G. Qiao, Journal of Membrane Science, 279 (2006), 1-49 dargelegt. Polyimide sind an sich bekannt und weisen Struktureinheiten der Formel -CO-NR-CO- auf. Diese Struktureinheiten können insbesondere ein Bestandteil eines Ringes sein, vorzugsweise eines Fünfrings.

Polyimide können vorzugsweise ein Gewichtsmittel des Molekulargewichts im Bereich von 25000 bis 500000 g/mol aufweisen.

Bevorzugte Polyimide können durch Kondensation von Anhydriden mit Aminen und/oder Isocyanaten erhalten werden. Bevorzugt wird dabei ein bifunktionales Anhydrid mit einem bifunktionalen Isocyanat in stark polaren, aprotischen Lösungsmitteln wie z.B. NMP, DMF, DMAc oder DMSO unter Abspaltung von CO₂ umgesetzt. Alternativ kann ein bifunktionales Anhydrid mit einem bifunktionalen Amin umgesetzt werden, wobei bei dieser Variante die vorerst gebildeten Polyamidsäure in einer zweiten Stufe imidisiert werden muss. Diese Imidisierung wird herkömmlicherweise thermisch bei Temperaturen oberhalb von 150 bis 350 °C oder chemisch unter Zuhilfenahme von Wasser entziehenden Mitteln wie Acetanhydrid und einer Base wie Pyridin bei Raumtemperatur durchgeführt.

Bevorzugte Monomerbausteine zur Herstellung der Polyimide umfassen unter anderem aromatische Diisocyanate, insbesondere 2,4-Diisocyanatotoluol (2,4-TDI), 2,6-Diisocyanatotoluol (2,6-TDI), 1,1'-Methylen-bis[4-isocyanatobenzol] (MDI), 1H-Indene-2,3-dihydro-5-isocyanato-3-(4-isocyanatophenyl)-1,1,3-trimethyl (CAS 42499-87-6); aromatische Säureanhydride, beispielsweise 5,5'-Carbonylbis-1,3-isobenzofurandion (Benzophenontetracarbonsäuredianhydrid, BTDA), Pyromellithsäureanhydrid (PMDA) Diese Monomerbausteine können einzeln oder als Mischung eingesetzt werden.

Gemäß einem besonderen Aspekt der vorliegenden Erfindung kann als Polyimid ein Polymer eingesetzt werden, welches aus der Umsetzung einer Mischung, die 5,5'-Carbonylbis-1,3-isobenzofurandion (BTDA) mit 2,4-Diisocyanatotoluol (2,4-TDI), 2,6-Diisocyanatotoluol (2,6-TDI), 1,1'-Methylen-bis[4-isocyanatobenzol] (MDI) umfasst, erhalten werden kann. Der Anteil an BTDA beträgt hierbei vorzugsweise mindestens 70 Mol-%, besonders bevorzugt mindestens 90 Mol-% und ganz besonders bevorzugt etwa 100 Mol.-%, bezogen auf die eingesetzten Säureanhydride. Hierbei beträgt der Anteil an 2,4-TDI vorzugsweise mindestens 40 Mol-%, besonders bevorzugt mindestens 60 Mol.-% und ganz besonders bevorzugt etwa 64 Mol.-%, bezogen auf die eingesetzten Diisocyanate. Der Anteil an 2,6-TDI beträgt gemäß dieser Ausführungsform vorzugsweise mindestens 5 Mol-%, besonders bevorzugt mindestens 10 Mol.-% und ganz besonders bevorzugt etwa 16 Mol.-%, bezogen auf die eingesetzten Diisocyanate.

Der Anteil an MDI beträgt gemäß dieser Ausführungsform vorzugsweise mindestens 10 Mol-%, besonders bevorzugt mindestens 15 Mol.-% und ganz besonders bevorzugt etwa 20 Mol.-%, bezogen auf die eingesetzten Diisocyanate.
Vorzugsweise kann des Weiteren als Polyimid ein Polymer eingesetzt werden, welches aus der Umsetzung einer Mischung, die 5,5'-Carbonylbis-1,3-isobenzofurandion (BTDA) und Pyromellithsäureanhydrid (PMDA) mit 2,4-Diisocyanatotoluol (2,4-TDI) und 2,6-Diisocyanatotoluol (2,6-TDI) umfasst, erhalten werden kann. Hierbei beträgt der Anteil an BTDA vorzugsweise mindestens 40 Mol-%, besonders bevorzugt mindestens 50 Mol-% und ganz besonders bevorzugt etwa 60 Mol.-%, bezogen auf die eingesetzten Säureanhydride. In dieser Ausführungsform beträgt der Anteil an Pyromellithsäureanhydrid (PMDA) vorzugsweise mindestens 10 Mol-%, besonders bevorzugt mindestens 20 Mol-% und ganz besonders bevorzugt etwa 40 Mol.-%, bezogen auf die eingesetzten Säureanhydride. Der Anteil an 2,4-TDI beträgt gemäß dieser Ausführungsform vorzugsweise mindestens 40 Mol-%, besonders bevorzugt mindestens 60 Mol.-% und ganz besonders bevorzugt etwa 64 Mol.-%, bezogen auf die eingesetzten Diisocyanate. Der Anteil an 2,6-TDI beträgt gemäß dieser Ausuhrungsform vorzugsweise mindestens 5 Mol-%, besonders bevorzugt mindestens 10 Mol.-% und ganz besonders bevorzugt etwa 16 Mol.-%, bezogen auf die eingesetzten Diisocyanate.

Neben Homopolymeren können des Weiteren auch Copolymere als Polyimide eingesetzt werden, die neben den Imidbausteinen weitere funktionale Gruppen in der Hauptkette umfassen. Gemäß einem besonderen Aspekt der vorliegenden Erfindung können die Polyimide mindestens zu 50 Gew.-%, bevorzugt mindestens zu 70 Gew.-% und ganz besonders bevorzugt mindestens zu 90 Gew.-% von Monomerbausteinen abgeleitet sein, die zu Polyimiden führen.

Besonders bevorzugt einzusetzende Polyimide können kommerziell unter der Handelsbezeichnung P84 von der Firma Inspec Fibres GmbH, Lenzing/Österreich oder von der Firma HP-Polymer GmbH, Lenzing / Österreich und unter der Bezeichnung Matrimid von Huntsman Advanced Materials GmbH/Bergkamen erhalten werden.

Die zur Herstellung der Filterschicht verwendbare Zusammensetzung weist mindestens 30 Gew.-%, bevorzugt mindestens 50 Gew.-% und ganz besonders bevorzugt mindestens 70 Gew.-% eines Lösungsmittels auf.

Lösungsmittel für die zuvor dargelegten Substanzen sind an sich bekannt. Zu den bevorzugten Lösungsmitteln zählen unter anderem polare organische Lösungsmittel, insbesondere dipolar aprotische Lösungsmittel, aromatische Amine, Phenole oder fluorierte Kohlenwasserstoffe. Zu den bevorzugten Phenolen gehören insbesondere m-Kresol, Thymol, Carvacrol und 2-tert.-Butylphenol.

Besonders bevorzugt können dipolar aprotische Lösungsmittel eingesetzt werden. Diese Lösungsmittel sind unter anderem im Römpp Chemie Lexikon 2. Auflage auf CD-ROM beschrieben. Zu den bevorzugten dipolar aprotischen Lösungsmitteln gehören unter anderem N-Methyl-2-pyrrolidon, *N*,*N*-Dimethylacetamid, Dimethylformamid und Dimethylsulfoxid.

Des Weiteren kann die erfindungsgemäße Zusammensetzung mindestens ein Vernetzungsmittel enthalten. Unter dem Begriff "Vernetzungsmittel" werden insbesondere Verbindungen verstanden, die zu einer Vernetzung der hochverzweigten Polymere führen können. Diese Verbindungen weisen dementsprechend mindestens zwei, bevorzugt mindestens drei und ganz besonders bevorzugt mindestens vier funktionelle Gruppen auf, die mit funktionellen Gruppen der hochverzweigten Polymere reagieren können.

Vorzugsweise weisen die Vernetzungsmittel Epoxidgruppen, Isocyanatgruppen und/oder Säuregruppen auf, wobei auch entsprechende Derivate dieser Gruppen, beispielsweise Säurehalogenide oder Säureanhydride enthalten sein können.

Zu den bevorzugten Vernetzungsmitteln zählen unter anderem Epoxidharze, z.B. erhalten durch Umsetzung von Bisphenol A mit Epichlorhydrin, die beispielsweise unter dem Handelsnamen Epikote von der Firma Hexion Specialty Chemicals Wesseling GmbH/Wesseling erhältlich sind. Weiterhin bevorzugt sind säure- oder anhydridmodifizierte Polymere wie z.B. Polyethylene, Polypropylene oder Polyethylvinylacetate, die beispielsweise von der Firma DuPont unter dem Handelsnamen Bynel vertrieben werden. Weiterhin bevorzugt sind blockierte Polyisocyanate. Weiterhin bevorzugt sind polymere Carbodiimide wie z.B. die unter dem Handelsnamen Stabaxol von der Firma Rhein Chemie Rheinau GmbH/Mannheim vertriebenen Produkte. Weiterhin bevorzugt sind auch niedermolekulare multifunktionale Verbindungen wie z.B. bifunktionale Anhydride, z.B. Benzophenontetracarbonsäuredianhydrid bzw. andere multifunktionale Säuren bzw. deren Derivate und auch multifunktionale Isocyanate bzw. deren blockierte Derivate.

Der Gewichtsanteil an Vernetzungsmittel in der Zusammensetzung kann vorzugsweise im Bereich von 0,01 bis 5 % und besonders bevorzugt im Bereich von 0,1 bis 1 % liegen, wobei sich diese Angaben auf die zur Herstellung der Membranen verwendete Zusammensetzung beziehen.

Das Gewichtsverhältnis von hochverzweigtem Polymer zu Vernetzungsmittel kann vorzugsweise im Bereich von 50 bis 1 und besonders bevorzugt im Bereich von 20 bis 1 liegen.

Die Zusammensetzung stellt vorzugsweise eine Lösung dar, deren Viskosität besonders bevorzugt in einem Bereich von 1 bis 50 Pas , insbesondere 2 bis 25 Pas und insbesondere von 5 bis 20 Pas liegt, gemessen gemäß DIN 53019.

Die Zusammensetzung kann insbesondere zur Herstellung von Membranen eingesetzt werden, mit denen Stoffe wie z. B. Gase getrennt werden können. Hierzu können die Zusammensetzungen beispielsweise mittels bekannter Methoden zu einer Membran gegossen oder zu einer Hohlfaser verarbeitet werden. Bevorzugte Gießverfahren sind unter anderem in N. Okui und A. Kubono [Prog. Polym. Sci. 19 (1994) 389-438], J. D. Swalen [Annu. Rev. Mater. Sci. 21 (1991) 373-408] sowie in J. Xu [J. Appl. Polym. Phys. 73 (1999) 521-526] beschrieben.

Die erfindungsgemäßen Membranen umfassen mindestens eine Filterschicht, die unter Verwendung der erfindungsgemäßen Zusammensetzung erhältlich ist. Sie arbeiten vorzugsweise nach dem Lösungs-Diffusions-Mechanismus. Bevorzugte Membranen der vorliegenden Erfindung weisen mindestens eine Stützschicht und mindestens eine Haftvermittlerschicht auf. Sie können darüber hinaus noch eine auf der Filterschicht aufgebrachte Schutzschicht enthalten. Entsprechende Membranaufbauten sind in Baker, Ind. Eng. Chem. Res. 2002, 41, 1393-1411 dargestellt. Im übrigen wird auf das Buch "Membrane Technology in the Chemical Industry", S. Pereira Nunes und K.-V. Peinemann (Hrsg.), April 2001, Wiley-VCH, Weinheim verwiesen.

Dementsprechend stellt die vorliegende Erfindung auch Membranen mit mindestens einer Filterschicht zur Verfügung, wobei die Filterschicht mindestens eine Komponente A) umfasst, die von linearen Polymeren abgeleitet ist, und mindestens eine Komponente B), die von hochverzweigten Polymeren abgeleitet ist, wobei das Gewichtsverhältnis von Komponente A) zu Komponente B) im Bereich von 0,05 zu 1 bis 1,0 zu 0,05 liegt. Gemäß bevorzugten Ausführungsformen kann das Gewichtsverhältnis von Komponente A) zu Komponente B) im Bereich von 20 : 1 bis 1 : 1, insbesondere bevorzugt im Bereich von 10 : 1 bis 1,5 : 1 und ganz besonders bevorzugt im Bereich von 5 : 1 bis 2 : 1 liegen.

Die Komponente A) ist von den zuvor dargelegten linearen Polymeren und die Komponente B) von den zuvor dargelegten hochverzweigten Polymeren abgeleitet. Der Begriff Komponente verdeutlicht, dass die linearen Polymeren als physikalische Mischung mit den hochverzweigten Polymeren, auch Blend genannt, vorliegen oder auch mit den hochverzweigten Polymeren beispielsweise durch ionische oder kovalente Bindungen verknüpft sein können.

Gemäß einem besonderen Aspekt der vorliegenden Erfindung kann die Filterschicht der Membran mindestens 5 Gew.-%, bevorzugt mindestens 15 Gew.-% und ganz besonders bevorzugt mindestens 20 Gew.-% an Komponente A), die von linearen Polymeren abgeleitet ist, aufweisen.

Vorzugsweise kann die Filterschicht der Membran 1 Gew.-%, bevorzugt mindestens 5 Gew.-% und ganz besonders bevorzugt mindestens 10 Gew.-% an Komponente B umfassen, die von hochverzweigten Polymeren abgeleitet ist.

Die Gewichtsanteile der jeweiligen Komponenten der Filterschicht sowie das Gewichtsverhältnis der Komponenten A) und B) ergeben sich aus den Gewichten der zur Herstellung der Filterschicht eingesetzten Zusammensetzung.

Die Filterschicht der vorliegenden Membranen weist vorzugsweise eine Dicke kleiner als 25 µm, besonders bevorzugt kleiner als 10 µm, insbesondere bevorzugt kleiner als 1µm und ganz besonders bevorzugt kleiner als 250 nm auf, die mittels Transmissionselektronenmikroskopie gemessen werden kann. Die untere Grenze der Membrandicke ergibt sich aus den mechanischen Anforderungen und den Anforderungen an die Dichtheit der Membran.

Die Wasseraufnahme (= Quellung in Wasser) kann nach ISO 62 (Wasseraufnahme im Vollkontakt) bestimmt werden. Dabei werden als Prüfkörper Platten verwendet, die beispielsweise durch einen Pressvorgang in einer beheizten Presse aus dem Ausgangsmaterial erzeugt werden. Vorliegend kann beispielsweise ein entsprechender Prüfkörper auch durch Gießverfahren herstellt werden, wobei unter anderem eine Zusammensetzung gemäß der vorliegenden Erfindung eingesetzt werden kann.

Die Wasseraufnahme wird gravimetrisch bestimmt. Vorzugsweise liegt die Wasseraufnahme im Bereich von 0,1 % bis 8 %, bevorzugt 0,5 % bis 5 %, besonders bevorzugt zwischen 0,7 % und 2 % (Gewichtsprozent).

Zur Bestimmung der Aufnahme nichtwässriger Medien wird wie in der ISO 62 vorgegangen, wobei im Vollkontakt bei 23 °C geprüft wird. Die entsprechenden Medien, beispielsweise Methanol, führen vorzugsweise zu einer Gewichtszunahme, die in einem im Bereich von 0,1 % bis 8 %, bevorzugt 0,5 % bis 5 %, besonders bevorzugt zwischen 0,7 % und 2 % (Gewichtsprozent) liegt.

Die Filterschichten zeigen eine hohe Temperaturstabilität. Gemäß einem besonderen Aspekt beträgt die Temperaturstabilität mindestens 100 °C, vorzugsweise mindestens 150 °C, insbesondere mindestens 200 °C. Die Temperaturstabilität der Filterschichten wird mit einer Testapparatur entsprechend ASTM D 1434 bestimmt. Dazu wird die Testzelle auf die zu bestimmende Stabilitätstemperatur, beispielsweise 100°C, insbesondere 150 °C oder bevorzugt 200 °C temperiert und nach gewissen Zeiten die Permeabilität und Selektivität der Membran gegenüber Stickstoff und Sauerstoff nach ASTM D 1434 gemessen. Bevorzugt zeigen sich nach 1000 h eine Verringerung der Permeabilität um weniger als 10 %, bevorzugt um weniger als 5 % und ganz bevorzugt um weniger als 2 %. Die Verringerung der Selektivität beträgt nach 1000 h Messdauer bei einer Temperatur von 150 °C weniger als 10 %, bevorzugt weniger als 5 % und ganz bevorzugt weniger als 2 %.

Die Filterschichten der vorliegenden Membranen zeigen hervorragende mechanische Eigenschaften. So können bevorzugte Filterschichten einen Elastizitätsmodul von mindestens 500 MPa, besonders bevorzugt mindestens 750 MPa, insbesondere mindestens 1000 MPa aufweisen, wobei der Elastizitätsmodul gemäß ASTM D882 gemessen wird.

Die Membranen der vorliegenden Erfindung können zur Trennung von Gasgemischen eingesetzt werden. Diese Mischungen können insbesondere Sauerstoff, Stickstoff, Kohlendioxid, Wasserstoff, Kohlenwasserstoffgase, insbesondere Methan, Ethan, Propan, Butan und Ammoniak enthalten, wobei diese Mischungen zwei, drei oder mehr der zuvor genannten Gase umfassen können.

Gemäß einem bevorzugten Aspekt kann eine erfindungsgemäße Membran insbesondere zur Trennung von Gasgemischen eingesetzt werden, die Sauerstoff enthalten. Bevorzugt zeigen die Membranen hierbei eine hohe Sauerstoffpermeabilität. Vorzugsweise beträgt die Sauerstoffpermeabilität mindestens 0,05 Barrer, besonders bevorzugt mindestens 0,1 Barrer, insbesondere bevorzugt mindestens 0,15 Barrer, gemessen bei 35 °C gemäß ASTM D 1434. Gemäß ganz besonders bevorzugten Ausführungsformen können auch Membranen erhalten werden, die eine Sauerstoffpermeabilität von vorzugsweise mindestens 0,5 Barrer, besonders bevorzugt mindestens 1,0 Barrer und ganz besonders bevorzugt mindestens 2,0 Barrer aufweisen, gemessen bei 35 °C gemäß ASTM D 1434.

Gemäß einem bevorzugten Aspekt kann eine erfindungsgemäße Membran insbesondere zur Trennung von Gasgemischen eingesetzt werden, die Stickstoff enthalten. Bevorzugt zeigen die Membranen hierbei eine hohe Stickstoffpermeabilität. Vorzugsweise beträgt die Stickstoffpermeabilität mindestens 0,001 Barrer, besonders bevorzugt mindestens 0,01 Barrer, insbesondere bevorzugt mindestens 0,015 Barrer, gemessen bei 35 °C gemäß ASTM D 1434.

Gemäß einem weiteren besonderen Aspekt können die Membranen auch eine geringe Stickstoffpermeabilität aufweisen, um beispielsweise hierdurch eine hohe Selektivität zu erzielen. Gemäß dieser Ausführungsform der Erfindung kann die Stickstoffpermeabilität vorzugsweise höchstens 0,1 Barrer, besonders bevorzugt höchstens 0,05 Barrer betragen, gemessen bei 35°C gemäß ASTM D 1434.

Die Permeabilität kann beispielsweise über die Art und Menge des hochverzweigten Polymeren sowie die Art und Menge des linearen Polymeren eingestellt werden, wobei ein hoher Anteil an hochverzweigten Polymeren vielfach zu einer höheren Permeabilität führen kann. Ein hoher Anteil an linearen Polymeren führt vielfach zu einer hohen Selektivität, ohne dass hierdurch eine Beschränkung erfolgen soll.

Die erfindungsgemäßen Membranen zeigen ein hervorragendes Trennungsvermögen, wobei sich dieses Trennungsvermögen insbesondere aus einer unterschiedlichen Permeabilität der Gase in Bezug auf die Membran ergibt. Die als Verhältnis der Stickstoff- zu Sauerstoff-Permeabilität definierte Selektivität von bevorzugten Membranen beträgt vorzugsweise mindestens 2, besonders bevorzugt mindestens 5, insbesondere bevorzugt mindestens 7 und ganz besonders bevorzugt mindestens 15.

Die Membranen der vorliegenden Erfindung können in jeder bekannten Form eingesetzt werden. Neben Flachmembranen können diese Membranen daher auch in Form von Hohlfasermembranen vorliegen.

Überraschend gelingt die Herstellung der Membran mit relativ geringen Mengen an Lösungsmittel, so dass der Feststoffgehalt relativ hoch ist. Dieser Vorteil gelingt unter anderem durch die Verwendung von hochverzweigten Polymeren. Hierdurch können weitere Vorteile erzielt werden. So wird beispielsweise der Explosionsschutz vereinfacht. Bei der Realisierung der Membranherstellung sind daher weniger technische Maßnahmen notwendig, um die gleiche Sicherheit zu erzielen. Des Weiteren ist durch die Verwendung von weniger Lösungsmittel ein Vorteil im Hinblick auf den Umweltschutz sowie dem Schutz der an der der Membranherstellung beteiligten Personen verbunden. Des Weiteren kann auf einen Quellungsschritt verzichtet werden, der ebenfalls unter Verwendung von Lösungsmittel erfolgen müsste.

Nachfolgend wird die vorliegende Erfindung durch Beispiele näher erläutert, ohne dass hierdurch eine Beschränkung erfolgen soll.

### Beispiele

### Herstellungsbeispiel A (Herstellung von PEI-g-PA6)

In einem 10 1-Rührautoklaven wurden folgende Einsatzstoffe vorgelegt:

| | |
|---|---|
| 4,454 kg | Caprolactam |
| 0,264 kg | demineralisiertes Wasser |
| 0,006 kg | hypophosphorige Säure (50 % w/w in Wasser) |

Der Kesselinhalt wurde inertisiert, auf 245 °C gebracht, 6 Stunden unter Rühren bei dem sich einstellenden Druck belassen und innerhalb von 90 Minuten auf 10 bar entspannt. Über eine Schleuse wurden dann 0,570 kg Lupasol® G100, eine 50 %ige wässrige Lösung eines Polyethylenimins der Molmasse 5100, zu beziehen bei der BASF AG, in den Reaktorinhalt gedrückt und 30 min bei dem sich einstellenden Druck von 16 bar in die Schmelze eingerührt. Anschließend wurde der Reaktor innerhalb von 3 Stunden entspannt und noch 2 Stunden unter einem Stickstoffstrom von 25 l/h gerührt. Der Kesselinhalt wurde mittels Schmelzepumpe als Strang ausgetragen und granuliert. Das Polymer wies folgende analytischen Kennwerte auf:

| | |
|---|---|
| Relative Lösungsviskosität (0,5 %ig in m-Kresol, 25 °C): | 1,20 |
| Carboxylendgruppen (alkalimetrisch gg.KOH in Benzylalkohol) | 10 mmol/kg |
| Aminoendgruppen (acidimetrisch gg. Perchlorsäure in m-Kresol) | 1116 mmol/kg |
| Schmelztemperatur: | 208 °C |

### Herstellungsbeispiel B (Herstellung von PEI-g-PA6)

Entsprechend Herstellungsbeispiel A brachte man in einem 10 1-Rührautoklaven folgende Einsatzstoffe zur Reaktion:

| | |
|---|---|
| 4,535 kg | Caprolactam |
| 0,014 kg | Dodecandisäure |
| 0,264 kg | demineralisiertes Wasser |
| 0,006 kg | hypophosphorige Säure (50 % w/w in Wasser) |

sowie 0,387 kg Lupasol^{®} G 100 als Nachsatz über die Schleuse. Das erhaltene Granulat wies folgende Kennwerte auf:

| | |
|---|---|
| Relative Lösungsviskosität (0,5 %ig in m-Kresol, 25 °C): | 1,30 |
| Carboxylendgruppen (alkalimetrisch gg. KOH in Benzylalkohol) | 7 mmol/kg |
| Aminoendgruppen (acidimetrisch gg. Perchlorsäure in m-Kresol) | 581 mmol/kg |
| Schmelztemperatur: | 214 °C |

### Herstellungsbeispiel C (Herstellung von PEI-g-PA6)

Entsprechend Herstellungsbeispiel A brachte man in einem 10 1-Rührautoklaven folgende Einsatzstoffe zur Reaktion:

| | |
|---|---|
| 4,441 kg | Caprolactam |
| 0,014 kg | Dodecandisäure |
| 0,264 kg | demineralisiertes Wasser |
| 0,006 kg | hypophosphorige Säure (50 % w/w in Wasser) |

sowie 0,569 kg Lupasol^{®} G 100 als Nachsatz über die Schleuse. Das erhaltene Granulat wies folgende Kennwerte auf:

| | |
|---|---|
| Relative Lösungsviskosität (0,5 %ig in m-Kresol, 25 °C): | 1,22 |
| Carboxylendgruppen (alkalimetrisch gg. KOH in Benzylalkohol) | 12 mmol/kg |
| Aminoendgruppen (acidimetrisch gg. Perchlorsäure in m-Kresol) | 775 mmol/kg |
| Schmelztemperatur: | 211 °C |

### Vergleichsbeispiel 1

Eine 10 %ige Lösung bestehend aus (a) 90 g Carvacrol und (b) 10 g P84 (Polyimid, erhältlich von Inspec Fibres GmbH) wurde durch Vermischen der Komponenten (a) und (b) hergestellt. Diese Lösung wurde mittels eines Filmaufziehgerätes (Fa. Elcometer) auf eine Glasplatte aufgebracht, wobei die Feuchtschichtdicke bei 250 µm lag. Die Trocknung der Membran erfolgte unter Stickstoffatmosphäre (24 h Raumtemperatur und anschließend 48 h 150 °C). Die hergestellte Membran wurde auf einer Apparatur gemäß ASTM D1434 bei 35 °C anhand der Gase Sauerstoff und Stickstoff vermessen.

Die Membran wies eine Sauerstoff-Permeabilität von 0,19 Barrer (O₂) und eine Stickstoff-Permeabilität von 0.013 Barrer auf. Hierdurch ergibt sich eine Selektivität von 14,6.

### Beispiel 1

Eine 10 %ige Lösung bestehend aus
(a) 90 g Carvacrol und
(b) 9 g P84 (Polyimid, erhältlich von Inspec Fibres GmbH) und
(c) 1 g des hyperverzweigten Polymers aus dem Herstellungsbeispiel A
wurde durch Vermischen der drei Komponenten (a) bis (c) hergestellt. Diese Lösung wurde mittels eines Filmaufziehgerätes (Fa. Elcometer) auf eine Glasplatte aufgebracht, wobei die Feuchtschichtdicke bei 250 µm lag. Die Trocknung der Membran erfolgte unter Stickstoffatmosphäre (24 h Raumtemperatur und anschließend 48 h 150 °C).

Die hergestellte Membran wurde auf einer Apparatur gemäß ASTM D1434 bei 35 °C anhand der Gase Sauerstoff und Stickstoff vermessen.

Die Membran wies eine Sauerstoff-Permeabilität von 0,101 Barrer (O₂) und eine StickstoffPermeabilität von 0,002 Barrer auf. Hierdurch ergibt sich eine Selektivität von 48.

Darüber hinaus wurde die Temperaturstabilität dieser Membran untersucht. Nach einer Messdauer von 1000 h bei 150 °C zeigte sich keine Verringerung der Permeabilität sowie der Selektivität gemessen nach ASTM D 1434.

### Beispiel 2

Eine 10 %ige Lösung bestehend aus (a) 90 g Carvacrol und (b) 9 g P84 (Polyimid, erhältlich von Inspec Fibres GmbH) und (c) 1 g des hyperverzweigten Polymers aus dem Herstellungsbeispiel B wurde durch Vermischen der drei Komponenten (a) bis (c) hergestellt. Diese Lösung wurde mittels eines Filmaufziehgerätes (Fa. Elcometer) auf eine Glasplatte aufgebracht, wobei die Feuchtschichtdicke bei 250 µm lag. Die Trocknung der Membran erfolgte unter Stickstoffatmosphäre (24 h Raumtemperatur und anschließend 48 h 150 °C).

Die hergestellte Membran wurde auf einer Apparatur gemäß ASTM D1434 bei 35 °C anhand der Gase Sauerstoff und Stickstoff vermessen.

Die Membran wies eine Sauerstoff-Permeabilität von 0,297 Barrer (O₂) und eine StickstoffPermeabilität von 0.008 Barrer auf. Hierdurch ergibt sich eine Selektivität von 37,1.

### Beispiel 3

Eine 10 %ige Lösung bestehend aus (a) 90 g Carvacrol und (b) 9 g P84 (Polyimid, erhältlich von Inspec Fibres GmbH) und (c) 1 g des hyperverzweigten Polymers aus dem Herstellungsbeispiel C wurde durch Vermischen der drei Komponenten (a) bis (c) hergestellt. Diese Lösung wurde mittels eines Filmaufziehgerätes (Fa. Elcometer) auf eine Glasplatte aufgebracht, wobei die Feuchtschichtdicke bei 250 µm lag. Die Trocknung der Membran erfolgte unter Stickstoffatmosphäre (24 h Raumtemperatur und anschließend 48 h 150 °C).

Die hergestellte Membran wurde auf einer Apparatur gemäß ASTM D1434 bei 35 °C anhand der Gase Sauerstoff und Stickstoff vermessen.

Die Membran wies eine Sauerstoff-Permeabilität von 0,343 Barrer (O₂) und eine StickstoffPermeabilität von 0.014 Barrer auf. Hierdurch ergibt sich eine Selektivität von 24,5.

### Vergleichsbeispiel 2

Aus reinem hyperverzweigtem PEI-g-PA6 (Lösung bestehend aus (a) 90 g Carvacrol und (b) 10 g hyperzweigtes Polymer aus dem Herstellungsbeispiel A) konnten keine mechanisch stabilen Membranen gefertigt werden.

### Vergleichsbeispiel 3

Weiterhin zeigte sich, daß Membranen, entsprechend erhalten aus einer 10 %igen Lösung bestehend aus (a) 90 g Carvacrol, (b) 9 g P84 (Polyimid, erhältlich von Inspec Fibres GmbH) und (c) 1 g Ultramid B27E (ein PA6 der BASF AG) nur Permeabilitäten von < 0,005 Barrer für Sauerstoff und Stickstoff aufweisen.

## Patentansprüche

1. Membran zur Gastrennung, die mindestens eine Filterschicht umfasst, die unter Verwendung einer Zusammensetzung erhalten werden kann, die als Komponente A) 0,1 bis 69,5 Gew.-% hochverzweigtes Polymer, und als Komponente B) 0,5 bis 69,9 Gew.-% lineares Polymer sowie des Weiteren 30 bis 99,4 Gew.-% Lösungsmittel enthält, wobei die Prozentangaben auf die Summe dieser drei Komponenten bezogen sind, und wobei das hochverzweigte Polymer ein Pfropfcopolymer ist, das Einheiten aufweist, die von folgenden Monomeren abgeleitet sind:
a) 0,5 bis 25 Gew.-%, bezogen auf das Pfropfcopolymer, eines Polyamins mit mindestens 11 Stickstoffatomen und einem zahlenmittleren Molekulargewicht Mₙ von mindestens 500 g/mol, wobei das Polyamin ein verzweigtes Polyethylenimin ist, das folgende Aminogruppenverteilung besitzt:
25 bis 46 % primäre Aminogruppen,
30 bis 45 % sekundäre Aminogruppen und
16 bis 40 % tertiäre Aminogruppen, und
b) polyamidbildenden Monomeren, ausgewählt aus Mischungen von Diaminen und Dicarbonsäuren, Lactamen und ω-Aminocarbonsäuren, wobei die Filterschicht mindestens die Komponente A) und mindestens die Komponente B) umfasst , wobei das Gewichtsverhältnis von Komponente A) zu Komponente B) im Bereich von 0,05 zu 1 bis 1 zu 0,05 liegt.

2. Membran gemäß Anspruch 1,
**dadurch gekennzeichnet,**
**dass** das lineare Polymer ein Polyimid, Polyetherimid, Polysulfon, Polyarylat, Polyetherarylat, Polycarbonat, Polypyrrolon, Polyacetylen, Polyethylenoxid, Polyphenylenoxid, Polyphenylensulfid, Polybenzimidazol, Polyoxadiazol, Polyetheretherketon und/oder Polyanilin ist.

3. Membran gemäß einem der vorhergehenden Ansprüche,
**dadurch gekennzeichnet,**
**dass** die Zusammensetzung ein Vernetzungsmittel umfasst.

4. Membran gemäß einem der vorhergehenden Ansprüche,
**dadurch gekennzeichnet,**
**dass** das Gewichtsverhältnis von Komponente A) zu Komponente B) im Bereich von 5 : 1 bis 2 : 1 liegt.

5. Membran gemäß einem der vorhergehenden Ansprüche,
**dadurch gekennzeichnet,**
**dass** die Komponente A) und die Komponente B) miteinander verknüpft sind.

6. Membran gemäß einem der vorhergehenden Ansprüche,
**dadurch gekennzeichnet,**
**dass** die Membran eine Sauerstoffpermeabilität von mindestens 0,05 Barrer aufweist.

7. Membran gemäß einem der vorhergehenden Ansprüche,
**dadurch gekennzeichnet,**
**dass** die Membran eine Stickstoffpermeabilität von mindestens 0,001 Barrer aufweist.

8. Membran gemäß einem der vorhergehenden Ansprüche,
**dadurch gekennzeichnet,**
**dass** die Membran eine Stickstoff/Sauerstoff-Selektivität von mindestens 2 aufweist.

9. Membran gemäß einem der vorhergehenden Ansprüche,
**dadurch gekennzeichnet,**
**dass** die Membran mindestens eine Stützschicht und mindestens eine Haftvermittlerschicht aufweist.

10. Verfahren zur Herstellung von Membranen gemäß einem der vorhergehenden Ansprüche,
**dadurch gekennzeichnet,**
**dass** eine gemäß einem der Ansprüche 1 bis 3 verwendete Zusammensetzung zu einer Membran gegossen oder zu einer Hohlfaser verarbeitet wird.

## Claims

1. Gas separation membrane which comprises at least one filter layer which can be obtained using a composition which contains, as component A), 0.1% to 69.5% by weight of highly branched polymer, and, as component B) 0.5% to 69.9% by weight of linear polymer and also furthermore 30% to 99.4% by weight of solvent, the percentages being based on the sum of these three components, and the highly branched polymer being a graft copolymer which has units derived from the following monomers:
a) 0.5% to 25% by weight, based on the graft copolymer, of a polyamine having at least 11 nitrogen atoms and a number-average molecular weight Mₙ of at least 500 g/mol, the polyamine being a branched polyethylenimine which possesses the following amino group distribution:
25% to 46% primary amino groups,
30% to 45% secondary amino groups and
16% to 40% tertiary amino groups, and
b) polyamide-forming monomers, selected from mixtures of diamines and dicarboxylic acids, lactams and w-aminocarboxylic acids, the filter layer comprising at least the component A) and at least the component B), the weight ratio of component A) to component B) being in the range from 0.05 : 1 to 1 : 0.05.

2. Membrane according to Claim 1, **characterized in that** the linear polymer is a polyimide, polyetherimide, polysulphone, polyarylate, polyetherarylate, polycarbonate, polypyrrolone, polyacetylene, polyethylene oxide, polyphenylene oxide, polyphenylene sulphide, polybenzimidazole, polyoxadiazole, polyetheretherketone and/or polyaniline.

3. Membrane according to either of the preceding claims, **characterized in that** the composition comprises a crosslinking agent.

4. Membrane according to claim 13, **characterized in that** the weight ratio of component A) to component B) is in the range from 5 : 1 to 2 : 1.

5. Membrane according to any one of the preceding claims, **characterized in that** component A) and component B) are linked to one another.

6. Membrane according to any one of the preceding claims, **characterized in that** the membrane has an oxygen permeability of at least 0.05 barrer.

7. Membrane according to any one of the preceding claims, **characterized in that** the membrane has a nitrogen permeability of at least 0.001 barrer.

8. Membrane according to any one of the preceding claims, **characterized in that** the membrane has an oxygen/nitrogen selectivity of at least 2.

9. Membrane according to any one of the preceding claims, **characterized in that** the membrane has at least one support layer and at least one adhesion promoter layer.

10. Method of producing membranes according to any one of the preceding claims, **characterized in that** a composition used according to any one of Claims 1 to 3 is cast to a membrane or processed to a hollow fibre.

## Revendications

1. Membrane destinée à la séparation de gaz, qui comprend au moins une couche filtrante, qui peut être obtenue avec utilisation d'une composition qui contient en tant que composant A) 0,1 à 69,5 % en poids de polymère hautement ramifié et en tant que composant B) 0,5 à 69,9 % en poids de polymère linéaire, ainsi qu'en outre 30 à 99,4 % en poids de solvant, les pourcentages étant exprimés par rapport à la somme de ces trois composants, et le polymère hautement ramifié étant un polymère greffé qui comporte des motifs qui sont dérivés des monomères suivants :
a) 0,5 à 25 % en poids, par rapport au polymère greffé, d'une polyamine ayant au moins 11 atomes d'azote et une masse moléculaire moyenne en nombre Mₙ d'au moins 500 g/mole, la polyamine étant une polyéthylène-imine ramifiée qui présente la distribution suivante de groupes amino :
25 à 46 % de groupes amino primaires,
30 à 45 % de groupes amino secondaires et
16 à 40 % de groupes amino tertiaires, et
b) des monomères formant des polyamides, choisis parmi des mélanges de diamines et d'acides dicarboxyliques, de lactames et d'acides ω-amino-carboxyliques,
la couche filtrante comprenant au moins le composant A) et au moins le composant B), le rapport pondéral du composant A) au composant B) se situant dans la plage de 0,05 : 1 à 1 : 0,05.

2. Membrane selon la revendication 1,
**caractérisée en ce que**
le polymère linéaire est un polyimide, un polyétherimide, une polysulfone, un polyarylate, un polyétherarylate, un polycarbonate, une polypyrrolone, un polyacétylène, un polyoxyéthylène, un polyoxyphénylène, un poly(sulfure de phénylène), un polybenzimidazole, un polyoxadiazole, une polyétheréthercétone et/ou une polyaniline.

3. Membrane selon l'une quelconque des revendications précédentes,
**caractérisée en ce que**
la composition comprend un agent de réticulation.

4. Membrane selon l'une quelconque des revendications précédentes,
**caractérisée en ce que**
le rapport pondéral du composant A) au composant B) se situe dans la plage de 5 : 1 à 2 : 1.

5. Membrane selon l'une quelconque des revendications précédentes,
**caractérisée en ce que**
le composant A) et le composant B) sont reliés l'un à l'autre.

6. Membrane selon l'une quelconque des revendications précédentes,
**caractérisée en ce que**
la membrane présente une perméabilité à l'oxygène d'au moins 0,05 barrer.

7. Membrane selon l'une quelconque des revendications précédentes,
**caractérisée en ce que**
la membrane présente une perméabilité à l'azote d'au moins 0,001 barrer.

8. Membrane selon l'une quelconque des revendications précédentes,
**caractérisée en ce que**
la membrane présente une sélectivité azote/oxygène d'au moins 2.

9. Membrane selon l'une quelconque des revendications précédentes,
**caractérisée en ce que**
la membrane comporte au moins une couche de soutien et au moins une couche d'agent d'adhérence.

10. Procédé pour la fabrication de membranes selon l'une quelconque des revendications précédentes, **caractérisé en ce**
**qu'**on coule en une membrane une composition utilisée des revendications 1 à 3 ou on la transforme en une fibre creuse.
